# EUROPÄISCHE PATENTSCHRIFT

(11) **EP 3 752 801 B1**
(45) Veröffentlichungstag und Bekanntmachung des Hinweises auf die Patenterteilung: **19.10.2022**
(21) Anmeldenummer: 19712128.8
(22) Anmeldetag: 14.02.2019
(51) Int. Cl.: G01G 11/00, G01G 11/04

(54) **FÖRDERSYSTEM FÜR SCHÜTTGÜTER**
CONVEYOR SYSTEM FOR BULK MATERIALS
SYSTÈME DE TRANSPORT POUR PRODUITS EN VRAC

(30) Priorität: 14.02.2018 DE 102018103307; 29.05.2018 DE 102018112831
(43) Veröffentlichungstag der Anmeldung: 23.12.2020
(73) Patentinhaber: Hochschule Düsseldorf, 40476 Düsseldorf (DE)
(72) Erfinder: JAHR, Andreas, 41462 Neuss (DE); TROFIMOV, Igor, 40764 Langenfeld (DE)
(74) Vertreter: IPrime Bonnekamp Sparing Patentanwaltsgesellschaft mbH
(86) Internationale Anmeldenummer: PCT/DE2019/100145
(87) Internationale Veröffentlichungsnummer: WO 2019/158161

(56) Entgegenhaltungen:
- DE-A1- 1 960 107
- DE-A1- 2 449 765
- DE-A1- 4 414 715
- DE-A1-102009 053 316

## Beschreibung

Die Erfindung betrifft ein Verfahren und eine Vorrichtung zur Ermittlung der Masse und Fördergeschwindigkeit von Schüttgütern in einem Linearschwingförderer, wobei aus einem Schüttgutbehälter das Schüttgut über eine Mündung auf eine Förderrinne gelangt.

Bei den Fördersystemen für Schüttgüter, wie z.B. Medikamenten oder anderen Granulaten, spielt eine genaue Regelung des Massenstroms des zu fördernden Produkts eine entscheidende Rolle. Der Massenstrom wird dabei meist durch unabhängiges Messen sowohl der Masse als auch der Geschwindigkeit des geförderten Gutes erfasst.

Während für die Ermittlung der Fördermasse sich eine einfache Gewichtskraftmessung anhand eines Kraftsensors (Wägemesszelle) sehr gut eignet, können zur Erfassung der Geschwindigkeit eines Förderstroms unterschiedliche Methoden angewendet werden. Zu den zurzeit etablierten Messverfahren gehören kamerabasierte Bildanalyseverfahren, Auswertung der Reflektionswellen eines Mikrowellensenders und eine differentielle Abwägung von diskreten Materialmengen.

An anderen Systemen wird die Fördergeschwindigkeit nicht gemessen, sondern durch bestimmte physikalische Bedingungen festgelegt, wie zum Beispiel durch eine definierte Fallhöhe oder Drehzahl eines Schnecken-, Schaufelrades oder eines Förderbandantriebes.

Bei hohen Anforderungen an Genauigkeit sind entweder sehr komplexe Verfahren und teure Messsysteme und/oder Unterbrechungen des fließenden Materialtransports erforderlich. Eine genauere und für verschiedene Schüttgüter universelle Geschwindigkeitsmessung ist immer noch sehr schwierig und teuer.

Im Fokus der aktuellen Entwicklung des Standes der Technik stehen zurzeit Massenstromregelungssysteme mit einer kontinuierlichen Erfassung der Masse und/oder der Geschwindigkeit eines konstant bewegenden Fördergutes zur Ermittlung des Massenstroms. Zu diesen gehören vor allem die Bandwaagen, die Prallplattenwaagen, die Coriolis-Massemesser oder die dynamischen Schurren-Waagen sowie ihre Kombinationen.

Bei den Bandwaagen erfolgt die Wiegung des Fördergutes über die Erfassung seiner Gewichtskraft anhand von Kraftsensoren. Die Geschwindigkeitsabnahme erfolgt über inkrementelle Drehgeber an dem Förderbandantrieb. Die Auswerteelektronik verknüpft die Transportgeschwindigkeit mit dem Gewicht. Der Massenstrom wird dann nachfolgend berechnet.

Die Vorteile einer solchen Konstruktion sind der relativ einfache Aufbau, die Unempfindlichkeit gegenüber der Art des Schüttgutes. Nachteile sind jedoch die Ungenauigkeit der Bestimmung der Geschwindigkeit des Fördermaterials aufgrund des Schlupfes des Förderbandes, sowie Ungenauigkeiten der Messung aufgrund des sich auf dem Band verrutschenden Förderguts. Außerdem es besteht das Problem, dass keine direkte Erfassung der Fördergeschwindigkeit erfolgt.

Bei einem Massenstromregler mit einem Schnecken- bzw. Doppelschnecken-Antrieb, wird der Produkt-Massenstrom ebenfalls anhand von Kraftsensoren ermittelt. Der Unterschied gegenüber einer Bandwaage besteht lediglich darin, dass die Fördergeschwindigkeit mittels eines Drehgebers an der Schneckenwelle ermittelt wird.

Bei einem Massenstromregler mit einer Prallplattenwaage wird die Beschleunigungskraft erfasst, die auftritt, wenn das Schüttgut auf eine schräg im Produktstrom angeordnete Messplatte prallt. Vorteile dieser Bestimmung des Massenstroms sind die Genauigkeit der Messung, die in einem Bereich von ca. 1% liegen und die Einsetzbarkeit auch bei abrasiven und heißen Materialien. Um eine hohe Genauigkeit mit der Prallplattenwaage zu erreichen, müssen die zu verwiegenden Produkte jedoch gut fließfähig und möglichst konstant in ihrer Dichte und Korngröße sein, d.h. die Prallplattenwaage ist nur für frei fließende Schüttgüter geeignet. Da die Messung von einem von einer definierten Höhe frei fallenden Produkt erfolgt, ist es nicht möglich eine Geschwindigkeitsregelung zu implementieren. Zudem ist die Anlage aufgrund ihrer komplexen Ausgestaltung verschleißbehaftet und materialintensiv im Aufbau. Das Waagegehäuse muss zudem staubdicht gefertigt werden und zur Dosierung des Schüttguts ist ein zusätzliches Gerät notwendig.

Das Prinzip eines Massenstromreglers mit einer Prallrohrwaage beinhaltet, dass das Schüttgut die Waage zunächst durch den Produkteinlauf erreicht. Das Schüttgut wird dann durch eine 90° Umlenkung gebremst. Dadurch wird erreicht, dass das Produkt definiert beschleunigt wird. Anschließend trifft das Schüttgut auf ein Prallrohr. In einem solchen Prallrohr wird einerseits die definierte Aufprallkraft und andererseits die auf den Rohrbogen des Prallrohrs ausgeübte Zentrifugalbeschleunigung gemessen. Danach verlässt das Schüttgut die Waage. Um eine hohe Genauigkeit mit der Prallrohrwaage zu erreichen, müssen die zu verwiegenden Produkte jedoch analog zu den Ausführungen zur Prallplattenwaage gut fließfähig und möglichst homogen in ihrer Dichte und Korngröße sein, d.h. die Prallplattenwaage ist nur für frei fließende Schüttgüter geeignet. Die Messung erfolgt von einem von einer definierten Höhe frei fallenden Produkt. Es nicht möglich eine Geschwindigkeitsregelung zu implementieren. Zudem ist die Anlage analog zu den Ausführungen zur Prallplattenwaage aufgrund ihrer komplexen Ausgestaltung verschleißbehaftet und materialintensiv im Aufbau. Das Waagegehäuse muss staubdicht gefertigt werden und zur Dosierung des Schüttguts ist ein zusätzliches Gerät notwendig.

Das Prinzip eines Massenstromreglers mit einer Messschurrenwaage basiert auf den Gesetzen der Zentripetalkraft. Das über einen speziellen Zulauf mit optimalem Aufgabenpunkt zugeführte Schüttgut wird auf eine radial geformte Schurrenfläche umgelenkt. Nach Newton tritt bei dieser radialen Bewegung eine nach außen gerichtete Zentrifugalkraft auf. Diese ist proportional zum Durchsatz. Durch eine spezielle Anordnung des Kraftsensors wird die Reibungskraft an der Schurre kompensiert. Die Vorteile einer Messschurrenwaage liegen darin, dass eine Genauigkeit von 1%- 0,2%, erzielt wird, die Waage schüttgutdichtenunabhängig ist und eine Kalibrierung nicht erfolgen muss. Nachteile einer Messschurrenwaage sind ihre Eignung lediglich für frei fließende Schüttgüter, die Ergebnisse können durch stärkere Luftströmungen verfälscht werden, ihr komplexer und materialintensiver Aufbau, die relativ hohe Wartungsintensivität und die Verschleißanfälligkeit. Für das Dosieren ist zudem ein zusätzliches Gerät notwendig.

In einem Massenstromregler mit einer Corioliswaage oder auch Rotorwaage wird eine Drehmomentmessung verwendet, die die Masse des geförderten Produktes unter Ausnutzung der Corioliskraft misst. Bei den mittels der Corioliswaage gemessenen Massenströmen handelt es sich hauptsächlich um Schüttgüter, insbesondere Stäube, Pulver und Mehle, aber auch Granulate und Getreide. Vorteile einer Corioliswaage sind ihre universelle Einsatzfähigkeit, ihre Genauigkeit der Messung im Bereich von 0,5 %, ihr Messbereich von Gramm-Bereich bis zu 150 t/h. Ihre Nachteile sind der sehr komplexe, wartungsintensive Aufbau und eine nur schwierig durchzuführende Eichung, wobei ein Tarieren notwendig ist. Zudem ist für das Dosieren des Schüttgutes ein zusätzliches Gerät notwendig.

Bei allen voran genannten Massenstromregelungssystemen gilt, dass die Energie, die dem Förderorgan vom Antrieb zugeführt wird, auf die Fördermasse übertragen wird. Die Energie muss dabei ausreichen, um eine Bewegung der Fördermasse zu ermöglichen. Die Höhe der zugeführten Energie pro einen Schwingvorgang bestimmt, ob eine Gleit- oder Wurfbewegung vorliegt.

Kinetische Energie eines schwingenden Systems ist dem Quadrat der Frequenz sowie dem Quadrat der Amplitude proportional. Bei den Schwingförderern wird die Regelung der Förderleistung je nach Antriebsystem entweder über Variation der Schwingungsfrequenz (z.B. Schwingförderer mit einem Kurbel- oder Exzenterantrieb) oder über Variation der Amplitude der Schwingung (Resonanzschwingförderer mit einem elektro-magnetischen Antrieb) realisiert.

Obwohl bei den Schwingförderern unterschiedlicher Bauart das Förderprinzip jedoch grundsätzlich ähnlich ist, sind unterschiedliche Stellgrößen für die Regelung der Förderleistung bei der jeweiligen Anwendung entscheidend.

So ist in der Patentliteratur ferner in der WO 2013/026574 eine Dosiervorrichtung für Schüttgut beschrieben, bei der ein Fördermittel freischwebend am Schüttgutbehälter aufgehängt ist. Es wird die Gewichtsbelastung des Fördermittels durch das Schüttgut ermittelt.

In der DE 10103854 A1 ist weiterhin eine Messvorrichtung sowie ein Verfahren zur Ermittlung eines kontinuierlichen Massenstroms beschrieben, bei dem der Zeitversatz markanter Schüttgutschwankungen beim Durchlauf über mindestens zwei Förderrinnenteile ermittelt und daraus die Fördergeschwindigkeit sowie die Förderstärke und/oder die Fördermenge errechnet wird.

Des Weiteren ist aus der Patentliteratur die WO 94/24028 bekannt, in der ein Schwingförderer mit horizontal angeordneten Stabfederelementen offenbart ist, wobei die Federelemente in Abhängigkeit von der Geschwindigkeit des Förderbandes in Schwingung versetzt werden können.

Ferner ist aus der DE 2449765 A1 eine Vorrichtung zur Massenbestimmung von längs einer Transportbahn bewegtem Schüttgut bekannt, wobei die Massen- bzw. die Gewichtsbestimmung des Schüttgutes aus dem Bewegungsimpuls ermittelt, den das auf der Transportbahn bewegte Schüttgut entweder bei seiner Beschleunigung aufnimmt oder bei seiner Abbremsung auf die Vorrichtung abgibt.

Die DE 19 60 107 A1 beschreibt eine Wägevorrichtung für Schüttgüter, wobei die Fördergeschwingkeit mittels eines auf dem Rinnenbelag mitlaufenden Messrads mit Tachometerdynamo erfasst wird.

Aus der DE 44 14 715 A1 ist ein Verfahren und eine Vorrichtung zur Bestimmung der Förderstärke einer Bandwaage bekannt, wobei die Bandgeschwindigkeit durch den Vergleich der Wägesignale von zwei Wägezellen, die in einem bestimmten Abstand auf der Bandwaage sind, erfasst wird.

Aufgabe der Erfindung ist es daher eine Low-Cost Massenstromregelung zur Erfassung der Schüttgutgeschwindigkeit für Schüttgutfördersysteme, insbesondere Linearschwingförderer bereitzustellen, die die Nachteile des bekannten Standes der Technik überwindet, d.h. bei einem kontinuierlichen Materialfluss soll mit Hilfe eines einzigen Kraftsensors, sowohl die Masse des zu fördernden Schüttgutes als auch auf seine Geschwindigkeit ermittelt werden können.

Die Aufgabe der Erfindung wird durch die Merkmale der unabhängigen Ansprüche 1 und 6 gelöst.

Es ist vorgesehen, dass zur Bestimmung der Massenstromregelung das Schüttgut verwendet wird, das auf der Rinne eines Linearförderers bewegt wird, welches aufgrund seiner Gewichtskraftkraft einen Moment um den Schwerpunkt des Gerätes erzeugt. Wird der Linearförderer kippbar um die Achse durch seinen Schwerpunkt gelagert und wird dabei ein Kraftsensor (Wägemesszelle) in der Ebene, die der Vektor der Gewichtskraft des Gerätes und der Vektor des Förderstroms aufspannt und an der Stelle abweichend von der Flusslinie der Gerätegewichtskraft angeschlossen, so ist es möglich die Kraft zu messen, welche das Dreh- oder Trägheitsmoment um eine Kippachse (Auflager) erzeugt. Diese Kraft kann nach einem vorangestellten Kalibrieren des Signals als Masse des Schüttgutes interpretiert werden.

Es ist ebenso möglich das erfindungsgemäße Verfahren ohne Auflager an der Kippachse (Nutzung der virtuellen Kippachse des Kippvorganges des Förderers auf seinen elastischen Standfüßen infolge des sich auf der Förderrinne bewegenden Fördergutes) durchzuführen. Es ist jedoch dann bei größeren Lasten ein drehbares Lager an der Kippachse für die benötigte Systemstabilität zu empfehlen.

Die erfindungsgemäße Lage des Kraftsensors in einem Abstand von der Flusslinie der Gewichtskraft des Linearförderers kann in jedem konkreten Anwendungsfall dem Messbereich, der Empfindlichkeit und der Baugröße des wiegenden Sensors sowie der Bauart und Form der Förderanlage angepasst werden. So ist es beispielsweise an einer Experimentellen Linearschwingförderanlage (beispielsweise mit dem Resonanzantrieb AF-14 von ARBO) gelungen, ein robustes, gut auswertbares Signal mit einem selbstentwickelnden Kraftsensor zu erhalten, der im Abstand von Kraftflusslinie des Gerätgewichts von ca. 50 mm bis 400 mm, mit einer Wägemesszelle (beispielsweise vom Typ HBM S2M 200N) im Abstand von ca. 150 mm bis und ca. 350 mm, sowie mit einem Kraftsensor (beispielsweisen vom Typ. BURSTER 20N) im Abstand von ca. 200 mm bis 300 mm an die Förderrinne angeschlossen ist.

Am Anfang der Förderung, wenn die Rinne gerade mit dem Fördergut gefüllt wird, steigt das Moment der Gewichtskraft des sich auf der Förderrinne bewegenden Fördergutes um die Kippachse und damit auch das Signal des Kraftsensors über der Zeit. Die Anstiegszeit des Signals entspricht der Zeit, die benötigt wird, damit Schüttgut die Gesamtlänge der Rinne füllt. Die Länge der Rinne ist immer bekannt und bleibt während der Messung konstant. Die Division der Länge der Förderrinne durch die Anstiegszeit des Signals des wiegenden Sensors gibt Auskunft über die Fördergeschwindigkeit des Gerätes. Wenn die Förderrinne über die gesamte Länge gefüllt wird, erreicht das Signal des Kraftsensors seinen maximalen Wert. Dieser Wert bleibt bei einem kontinuierlichen Massenstrom konstant über der Zeit.

Um die Ermittlung der Geschwindigkeit des Massenstroms an einem konstanten Signalverlauf zu ermöglichen, sollen vorübergehend die Anfangsbedingungen der Signalentstehung wiederhergestellt werden. Um auf die Geschwindigkeit des Fördergutes schließen zu können, muss am konstanten Materialfluss eine geringfügige Massenänderung vorgenommen werden, wodurch eine Unstetigkeit (Diskontinuität) des konstanten Signals (zeitabhängiges Signal bzw. Zeitsignal des wiegenden Sensors) verursacht wird. Eine geringfügige Massenänderung muss am konstanten Massenfluss realisiert werden. Dem zu messenden Schüttgutstrom wird erfindungsgemäß, eine kleine Masse (Diskontinuitätsmasse) zugegeben bzw. entnommen. Die Diskontinuitätsmasse, die der Gesamtmasse des Fördergutes zugeführt bzw. entnommen wird, bewegt sich auf der Rinne des Linearförderers mit der gleichen Geschwindigkeit wie der Gesamtstrom. Diese Bewegung ruft wieder einen Anstieg bzw. Abnahme des Momentes um die Kippachse des Förderers und folglich eine Signalveränderung hervor. Die Massenänderung kann dabei an oder unterhalb der Mündung des Schüttgutbehälters erfolgen. Diese Signalveränderung kann hinsichtlich der Fördergeschwindigkeit in einer Auswerteeinheit wie beispielsweise einem Computer ausgewertet werden.

Die Massenveränderung am fließenden Schüttgut können beispielsweise mittels Zugabe/ Wegnahme einer Menge des geförderten Schüttgutes (Schüttgut eigene Masse) realisiert werden. Es kann jedoch auch eine von der Art des Schüttguts abweichende Menge oder Körper (Schüttgut fremde Masse) alternativ hinzugefügt bzw. entnommen werden.

Die Diskontinuitätsmasse soll einerseits so gering angehalten werden, dass die gesamte Schüttgut- bzw. Massenstrommessung trotzdem die Grenze der angeforderten Genauigkeit nicht überschreitet, andererseits soll diese einen signifikanten Wert zum Erzeugen eines in einer Auswerteeinheit auswertbaren Zeitsignals des wiegenden Sensors liefern.

Da die Diskontinuitätsmasse einen gewollten Fehler am kontinuierlichen Massenstrom darstellt, soll dieser wieder ausgeglichen werden. Erfolgt nach Erzeugung einer Signaldiskontinuität ein umgekehrter Vorgang, zum Beispiel nach einer Massenzufuhr durch Wegnahme einer gleichen Maße, so ist der Gesamtdurchsatz des Systems wiederhergestellt. Es bilden sich dabei am wiegenden Sensor zwei reziproke Signalveränderungen gleicher Stärke (Amplitude). Jeder der beschriebenen Vorgänge bietet eine weitere Möglichkeit die Geschwindigkeit der Schüttgutströmung zu ermitteln. Die Signale können insofern zur Kontrolle bzw. zur Korrektur des ermittelten Wertes der Fördergeschwindigkeit benutzt werden.

Des Weiteren besteht die Möglichkeit das Gesamtsignal mit Hilfe einer speziellen Diskretisierung der beschriebenen Vorgänge zu Funktionen oder gar Datenwörtern zu modulieren. Aus der Messung der Zeit zwischen dem Erzeugen des modulierten Signals und der Wiedererkennung des erzeugten Signalmusters am Signal des wiegenden Sensors beim Auslaufen des Materials auf der Förderrinne erhält man den Zeitabstand.

Wenn diese Methode separat angewendet wird, spielen die Amplitude und die Dauer der Diskontinuität keine wesentliche Rolle mehr, da der Wert des Zeitsignals des wiegenden Sensors nur so groß sein darf, dass sie gerade von der Apparatur erkannt wird. Das bedeutet, dass die Massendiskontinuitäten deutlich geringer gehalten werden können, um ihren Einfluss auf die Messgenauigkeit zu minimieren.

Eine Massenstromregelung auf einem erfindungsgemäßen Linearschwingförderer erfolgt vorliegend mit einer frequenz- oder amplitudengesteuerten Fördergeschwindigkeit durch Erfassung und Auswertung des Zeitsignals des wiegenden Sensors, welches aufgrund der oben beschriebenen Kinematik der Fördereranlage, einer oben beschriebenen speziellen Lage des wiegenden Sensors und einer in dem konstanten Förderstrom erzeugten Massendiskontinuität erzeugt wird.

Eine Massendiskontinuität im sonst konstanten Materialfluss kann erfindungsgemäß auch durch Variation der Fördergeschwindigkeit erzeugt werden. Durch eine kurzfristige Veränderung der Förderleistung kann eine rechteckförmige Störung im konstanten Steuerungssignal des Schwingungsgebers des Linearförderers erzeugt werden, wobei eine Veränderung des Drehmoments um die Kippachse und damit eine Veränderung des Zeit-/Massesignals erfolgt, die in einer Auswerteeinheit wie beispielsweise einem Computer auswertet werden können.

Das Volumen einer zu transportierenden Materialmenge, die sich auf der Förderinne eines Linearförderers befindet, hängt nicht nur von den geometrischen Abmessungen des Förderorgans ab, sondern es ist auch stark von der momentanen Förderleistung (Fördergeschwindigkeit) abhängig. Grund dafür ist das keilförmige Strömungsprofil, dessen Gefälle bzw. Krümmungslinie der Oberfläche von der Förderleistung abhängt.

Bei der Erhöhung der Fördergeschwindigkeit während eines konstanten Fördervorganges bildet sich ohne das erfindungsgemäße Verfahren auf der Förderrinne im Bereich der Mündung des Schüttgutbehälters eine Vertiefung im Schüttgutprofil und vice versa bei einem Herabsetzen der Fördergeschwindigkeit an dieser Stelle eine Anhäufung des Schüttgutmaterials auf der Förderrinne.

Diese Formationen stellen lokale Volumen- bzw. Massenänderungen im konstanten Förderstrom dar, deren Bewegung entlang der Förderrinne, eine Unstetigkeit (Diskontinuität) im konstanten Signal des wiegenden Kraftsensors hervorruft.

Dieses Verhalten ist für die Linearschwingförderer mit einer frequenzgesteuerten Förderleistungsregelung charakteristisch. Bei den Linearschwingförderern mit einer amplitudengesteuerten Regelung der Förderleistung (Resonanzschwingförderer) wird beim Übersteigen einer materialspezifischen Betriebsförderleistung (beispielsweise im Transportvorgang eines PE Granulates sphärischer Körnung mit homogener Korngröße von ca. 4mm beim Überstieg der Marke von ca. 38% der maximalen Förderleistung) umgekehrte Effekte beobachtet. Das heißt, eine Erhöhung der Förderleistung wird eine Zunahme der momentanen Fördermasse und umgekehrt ein Herabsetzen der Förderleistung wird eine Abnahme der Fördermasse an der Mündung des Zufuhrbehälters hervorrufen.

Eine mögliche Erklärung für dieses Verhalten eines Granulates infolge der Zu- bzw. Abfuhr der Energie bei höheren Fördergeschwindigkeiten an einem Resonanzschwingförderer, lässt sich durch die Veränderung der Struktur der Materialströmung und Bildung von lokalen Schuttgutdichtenänderungen im Querschnitt des Materialstroms und folglich lokalen Massenunterschieden im Schüttgutmaterial finden.

Bei höheren Fördergeschwindigkeiten wird dem Schüttgut über eine hohe Schwingungsleistung genug Energie zugeführt, damit sich nicht nur die Verbindung Fördermaterial-Förderorgan, sondern stärkere interpartikuläre Verbindungen in der Materialmenge auf der Förderrinne trennen. Die Eigenschaften des Schüttgutes verändern sich dabei dermaßen, dass sich folgende Mechanismen vorstellen lassen:
Durch den erhöhten Anteil der Hohlräume im Fördermaterial wächst die Aufnahmekapazität des sich auf der Rinne befindenden Materialvolumens für die weiteren Partikel. Wird nun die Fördergeschwindigkeit höher gesetzt, erhöht sich die Fördermasse an der Mündung des Zufuhrbehälters durch die sich aus dem Bunker in den Fördervolumen eindringenden zusätzlichen Partikel. Wird die Geschwindigkeit dagegen reduziert, behält der Materialstrom länger seine hohe Geschwindigkeit aufgrund der Massenträgheit und verringerter Innenreibung bei und die Masse des Materials auf der Rinne im Bereich des Nachfüllbehälters wird kleiner.

Das erfindungsgemäße Verfahren und die erfindungsgemäße Vorrichtung eignen sich beispielsweise zur Verwendung in der pharmazeutischen Industrie im Bereich der Medikamentenherstellung und insbesondere zum Einsatz im Bereich der Pelletierung von Kapseln und Tabletten.

Die Nutzung der erläuterten Phänomene zur Bestimmung der Masse als auch der Geschwindigkeit eines zu fördernden Schüttgutes in einem konstanten Materialstrom, wurde auf einem speziell entwickelten und gebauten Prüfstand mit einer Steuer- und Auswerteeinheit verifiziert.

Die Erfindung wird anhand der nachfolgenden Figuren nochmals eingehend beschrieben:

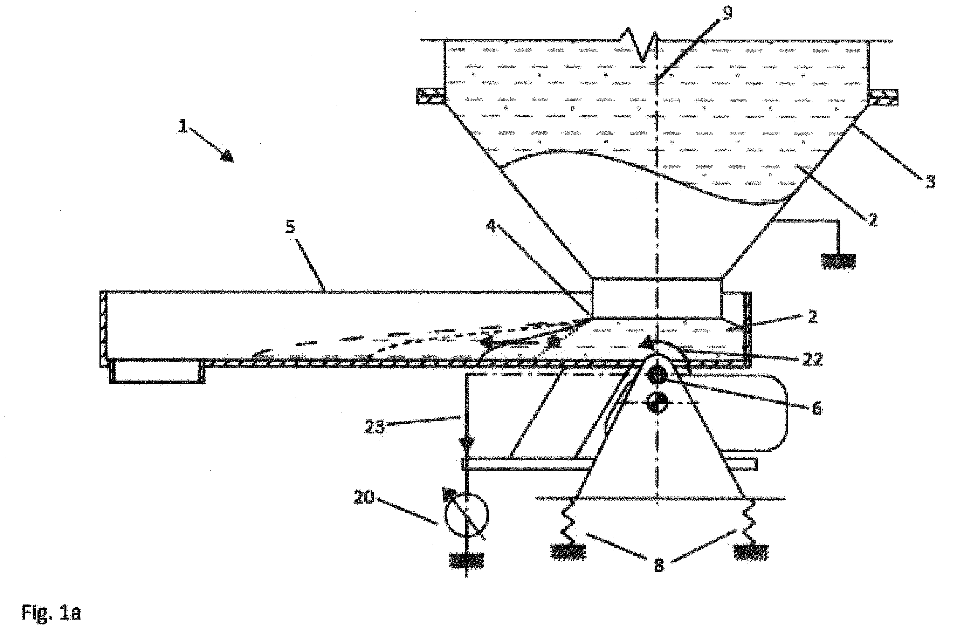

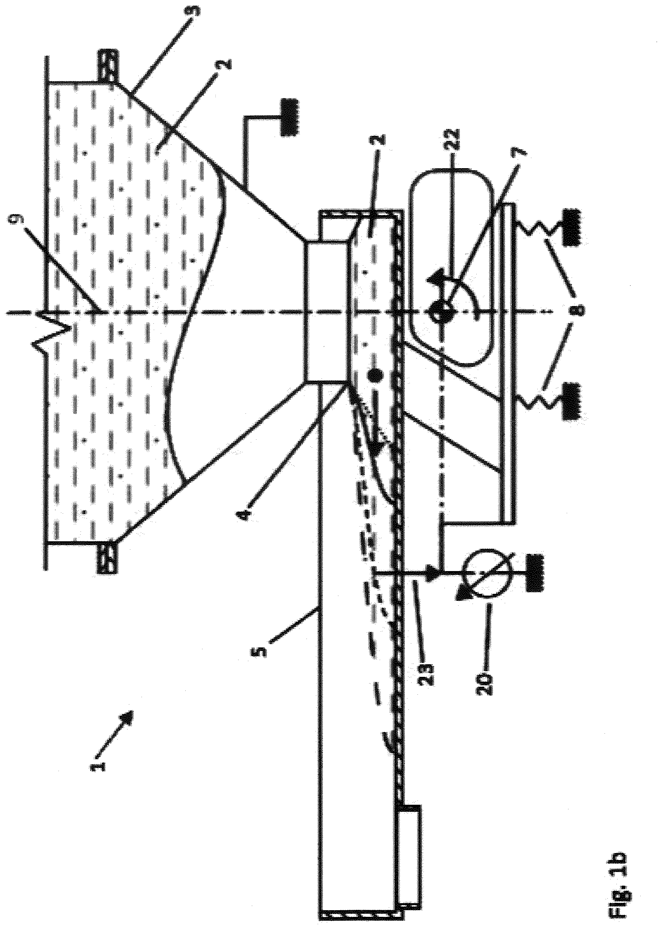

Figur 1a und Figur 1b zeigen den Aufbau und das kinematische Schema eines schwingungsbetriebenen Linearförderers 1 für Schüttgut 2. Man erkennt einen Schüttgutbehälter 3 in dem sich Schüttgut 2 befindet. An der Mündung 4 des Schuttgutbehälters 3 gelangt Schüttgut 2 auf die Förderrinne 5 des Linearförderers 1. Der Linearförderer 1 ist kippbar gelagert, wobei entweder ein drehbares Lager 6 oder eine virtuelle Kippachse 7 basierend auf den elastischen Gerätefüßen 8 genutzt wird. Der Sensor 20 wird in einem bestimmten Abstand von der durch die Gewichtskraft des Schüttgutes 2 im Nachfüllbehälter 3 und der Gewichtskraft des Linearförderers 1 resultierenden Kraftflusslinie 9 montiert. Mit dem Sensor 20 kann die Kraft 23 gemessen werden, die das Drehmoment um das Lager 6 beziehungsweise um die virtuelle Kippachse 7 verursacht. Verändert sich das Drehmoment 22 über der Zeit, zum Beispiel wegen einer sich entlang der Förderrinne 5 bewegenden Massendiskontinuität 17, führt es zu einer zeitabhängigen Veränderung 18 des Signals des wiegenden Sensors 20. Diese Signalveränderung kann hinsichtlich der Fördergeschwindigkeit in einer Auswerteeinheit wie beispielsweise einem Computer ausgewertet werden.

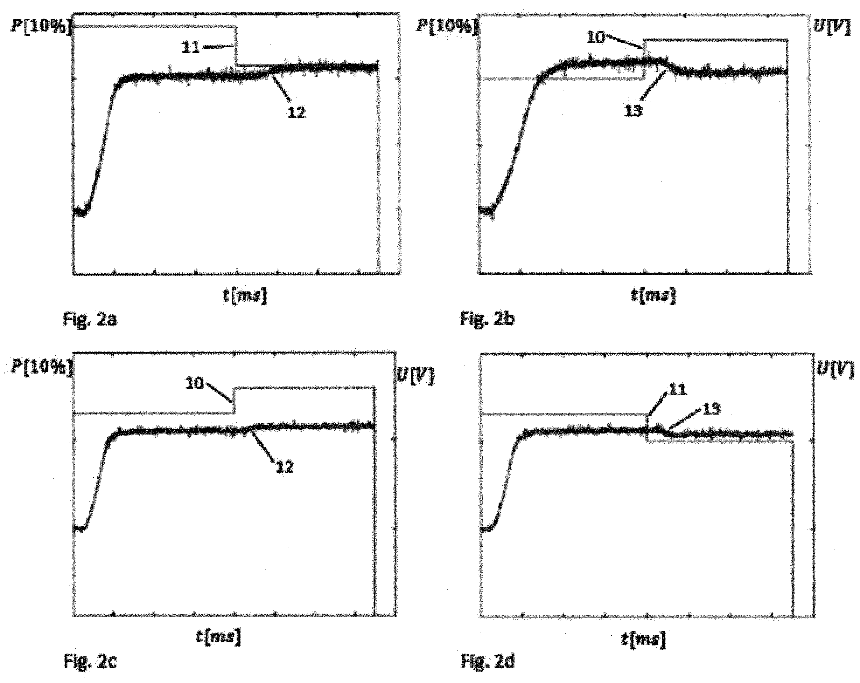

Aus Figur 2a bis Figur 2d ist erkennbar, dass durch Einstellen von verschiedenen Förderleistungen des Linearförderers 1 bzw. Geschwindigkeiten des Schüttgutes 2 auf der Förderrinne 5 unterschiedliche Förderrinnenladungen erreicht werden können. Nachdem die anfänglich leere Förderrinne 5 mit Schüttgut 2 aufgefüllt worden ist, wird die Antriebsleistung sprungartig um einen jeweils gleichen Betrag vergrößert 10 oder verringert 11. Das Signal des Sensors 20 zeigt dabei jeweils eine Veränderung in seinem sonst konstanten Bereich, die auf eine Erhöhung 12 oder auf Reduzierung 13 der Ladung der Förderrinne hindeuten.

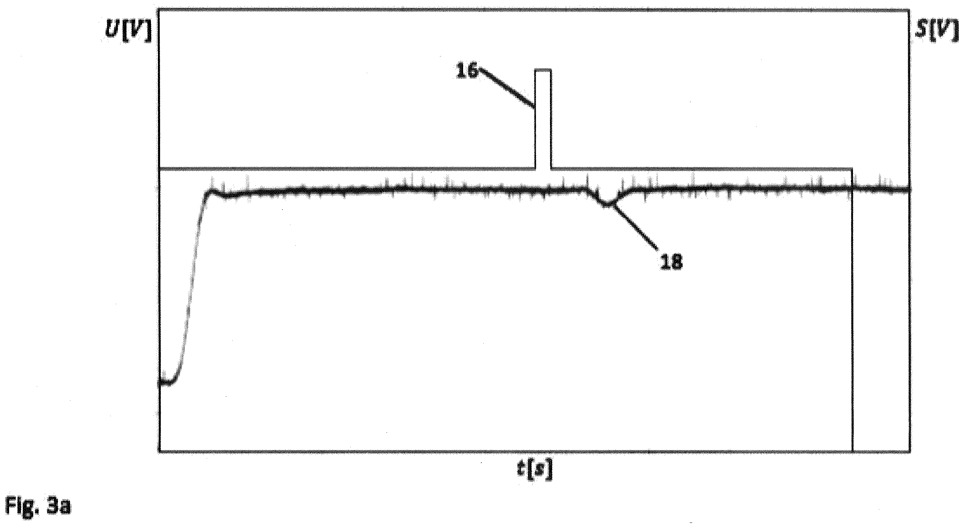

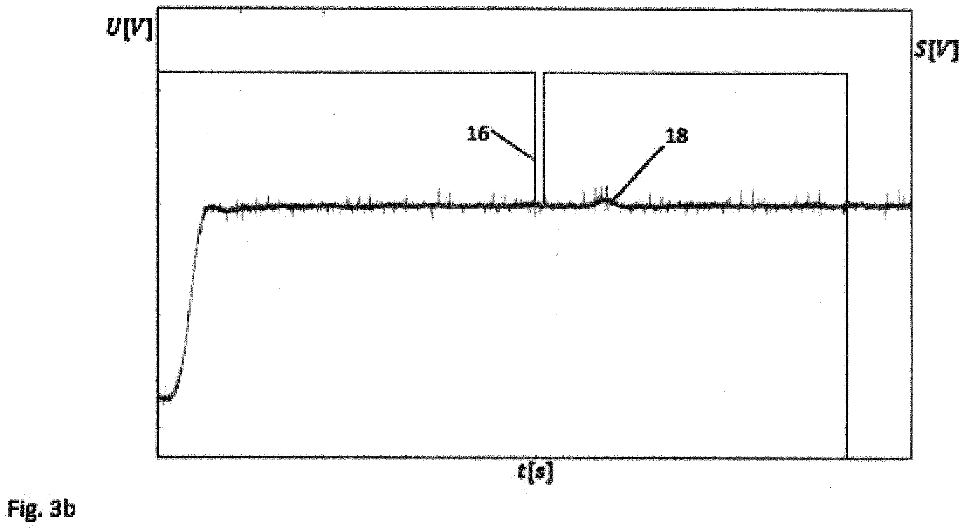

Figur 3a und Figur 3b zeigen, dass eine Diskontinuität 17 im sonst konstanten Materialfluss durch Variation der Förderleistung entsteht. Durch eine kurzfristige Veränderung der Fördergeschwindigkeit, zum Beispiel durch Erzeugung einer rechteckförmigen Störung 16 im Steuersignal des Schwingungsgebers des Linearförderers 1, ist es möglich, an der Mündung 4 eines Schüttgutbehälters 3 lokale Volumen- bzw. Massenveränderungen entstehen zu lassen. Eine solche Massendiskontinuität 17, die sich mit der gleichen Geschwindigkeit wie der Gesamtförderstrom entlang der Förderrinne 5 bewegt, verursacht eine Veränderung des Drehmoments 22 um die virtuelle Kippachse 7 bzw. um die Achse des Lagers 6. Auf die Veränderung des Drehmoments um die Kippachse reagiert der Sensor 20 mit einem Zeitsignal 18, das zu Fördergeschwindigkeit im sonst konstanten Fördervorgang ausgewertet werden kann.

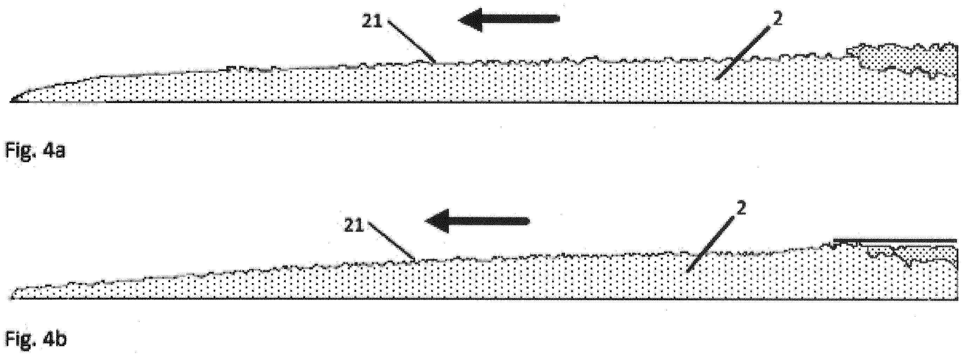

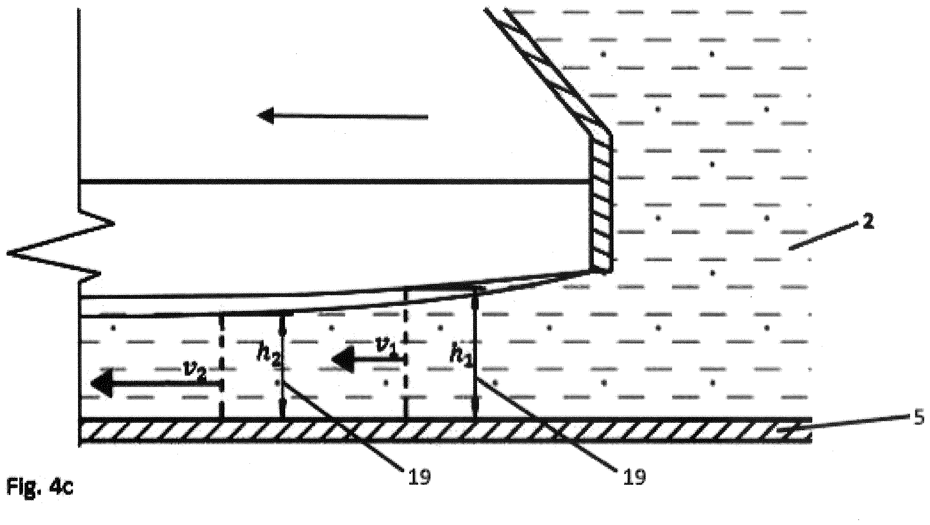

In Figur 4a, Figur 4b und Figur 4c ist dargestellt, dass das Volumen des Schüttgutstromes von der Länge und Breite der Förderrinne 5 sowie durch die Höhe der Mündung 4 des Schüttgutbehälters 3 bestimmt wird und von seinem keilförmigen Profil 21 abhängt. Die Form des Profils (das Gefälle des Profilkeils 21) ist stark von der Fördergeschwindigkeit abhängig, wobei die Ausbildung unterschiedlicher Schichtguthöhen 19 des Schüttgutes 2 über dem Boden der Förderrinne 5 mit h₁ und h₂ aufgrund unterschiedlicher Geschwindigkeiten v₁< v₂ dargestellt ist.

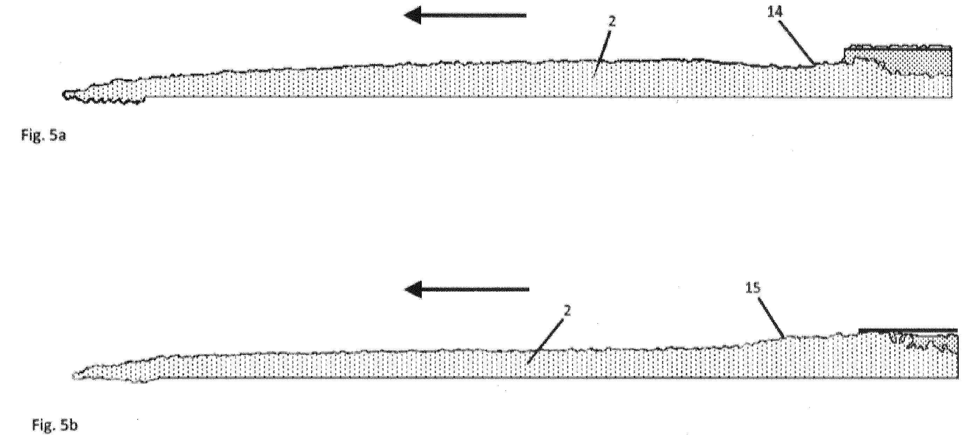

Figur 5a und 5b zeigt die Bildung von Volumenänderungen im Strömungsprofil des zu fördernden Schüttgutes 2 infolge Erhöhung 10 bzw. Erniedrigung 11 der Förderleistung des Linearförderers 1. Man erkennt eine Materialanhäufung 15 des Schüttgutes 2 auf der Förderrinne 5 bei Erniedrigung 11 in Figur 5b, sowie eine Vertiefung 14 in dem Schüttgut 2 auf der Förderrinne 5 bei Erhöhung der Fördergeschwindigkeit bzw. Förderleistung 10 in Figur 5a.

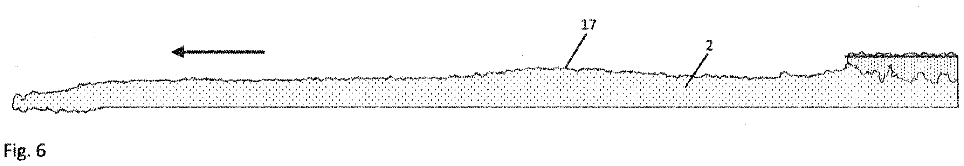

Figur 6 zeigt die ausgebildete Massendiskontinuität 17 im Profil einer konstanten Strömung des Schüttguts 2, das sich mit der gleichen Geschwindigkeit wie das zu transportierende Schüttgut 2 entlang der Förderrinne 5 bewegt.

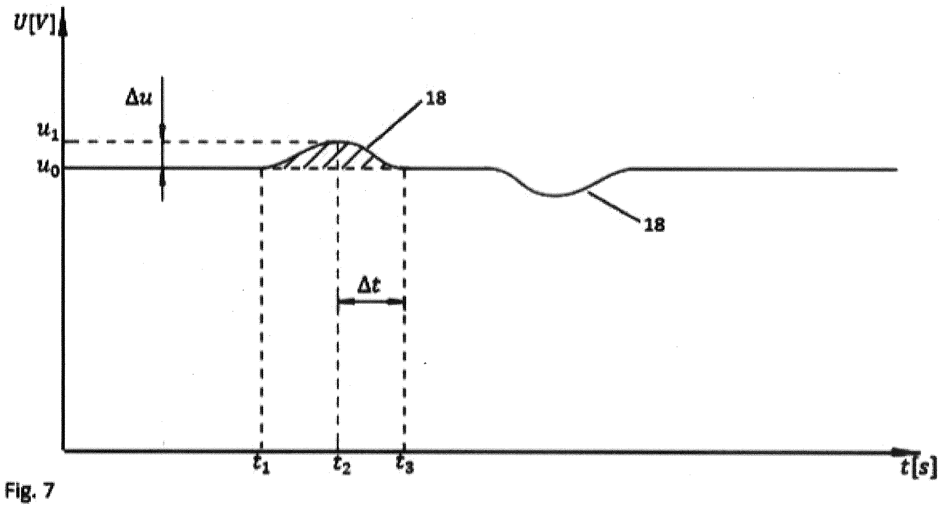

Figur 7 zeigt schließlich, dass durch nacheinander folgende, reziproke Vorgänge zur Erzeugung eines Zeitsignals 18 am wiegenden Sensor 20 im konstanten Fördervorgang eines Schüttgutes 2, ein Ausgleich des Massenstromfehlers wegen Massendiskontinuität 17 erfolgt. Die Auswertung des Zeitsignals 18 zur Fördergeschwindigkeit im Zeitbereich Δ t (t₃-t₂) und der Wert Δ u (u₁-u₀) werden dabei so gering wie möglich gehalten.

### Bezugszeichenliste

- 1: Linearförderer
- 2: Schüttgut
- 3: Schüttgutbehälter
- 4: Mündung des Schüttgutbehälters
- 5: Förderrinne
- 6: Lager
- 7: virtuelle Kippachse
- 8: elastische Gerätefüße
- 9: Kraftflusslinie der Gewichtskraft des Linearförderers
- 10: Erhöhung der Fördergeschwindigkeit
- 11: Erniedrigung der Fördergeschwindigkeit
- 12: Erhöhung der Ladung der Förderrinne
- 13: Reduzierung der Ladung der Förderrinne
- 14: Vertiefung im Strömungsprofil
- 15: Anhäufung im Strömungsprofil
- 16: Rechteckstörung im Steuersignal des Schwingungsgebers
- 17: Massendiskontinuität im Strömungsprofil
- 18: Zeitsignal im sonst konstanten Signal des wiegenden Sensors
- 19: Schüttguthöhe
- 20: wiegender Sensor
- 21: Profilkeil
- 22: Drehmoment um die Kippachse infolge Gewichtskraft der Förderrinnenladung
- 23: Kraft auf dem wiegenden Sensor infolge des Drehmomentes um den Schwerpunkt des Linearförderers

## Patentansprüche

1. Verfahren zur Ermittlung der Masse und Fördergeschwindigkeit von Schüttgütern in einem Linearförderer (1), wobei über eine Mündung (4) eines Schüttgutbehälters (3) das Schüttgut (2) auf eine Förderrinne (5) gelangt,
**dadurch gekennzeichnet,**
**dass** eine Unstetigkeit im konstanten Verlauf des Signals eines Sensors (20) durch eine Massenänderung des geförderten Schüttguts erzeugt wird und mit Hilfe des Sensors (20) das Drehmoment (22) der Gewichtskraft des geförderten Schüttgutes (2) bestimmt werden, wobei eine Auswertung der erzeugten Signalveränderung (18) zur Bestimmung der Masse und/oder der Geschwindigkeit des geförderten Schüttgutes (2) erfolgt.

2. Verfahren nach Anspruch 1, **dadurch gekennzeichnet, dass** die Massenänderung durch Zugabe oder Entnahme einer Schüttgut (2) eigenen Masse oder einer Schüttgut (2) fremden Masse erfolgt.

3. Verfahren nach Anspruch 1 oder 2, **dadurch gekennzeichnet, dass** die Massen- oder Signalveränderung durch Erhöhung (10) oder Erniedrigung (11) der Fördergeschwindigkeit erfolgt.

4. Verfahren nach einem der Ansprüche 1 bis 3, **dadurch gekennzeichnet, dass** die Massenänderung an der Mündung des Nachfüllbehälters (3) des Linearförderers (1) erfolgt.

5. Verfahren nach einem der Ansprüche 1 bis 4, **dadurch gekennzeichnet, dass** die Masse des transportierten Schuttgutes (2) auf dem Linearförderer (1) durch je zwei nacheinander folgende reziproke Vorgänge durch Zugabe oder Entnahme einer Schüttgut (2) eigenen Masse oder einer Schüttgut (2) fremden Masse oder der Änderung der Fördergeschwindigkeit konstant gehalten wird.

6. Verfahren nach einem der Ansprüche 1 bis 5, **dadurch gekennzeichnet, dass** der Linearförderer (1) kippbar gelagert ist.

7. Vorrichtung zur Ermittlung der Masse und Fördergeschwindigkeit von Schüttgütern in einem Linearförderer (1), wobei über eine Mündung (4) eines Schüttgutbehälter (3) das Schüttgut (2) auf eine Förderrinne (5) gelangt, **dadurch gekennzeichnet, dass** mit Hilfe eines Sensors (20) das Drehmoment (22) der Gewichtskraft des geförderten Schüttgutes (2) bestimmt und durch eine Massenänderung des geförderten Schüttguts (2) eine Unstetigkeit des Signals eines Sensors (20) erzeugt und die erzeugte Signalveränderung (18) zur Bestimmung der Masse und/oder der Geschwindigkeit des geförderten Schüttgutes (2) in einer Auswerteeinheit ermittelt wird.

8. Vorrichtung nach Anspruch 7, **dadurch gekennzeichnet, dass** der Sensor (20) außerhalb der Kraftflusslinie (9) der Gewichtskraft des Linearförderers (1) angeordnet ist.

9. Vorrichtung nach Anspruch 7 oder 8, **dadurch gekennzeichnet, dass** der Sensor (20) im Bereich 50 mm bis 400 mm, bevorzugt 150 mm bis 350 mm, besonders bevorzugt 200 mm bis 300 mm außerhalb der Kraftflusslinie (9) der Gewichtskraft des Linearförderers (1) angeordnet ist.

10. Vorrichtung nach einem der Ansprüche 7 bis 9, **dadurch gekennzeichnet, dass** die Massenänderung durch Zugabe oder Entnahme einer Schüttgut (2) eigenen Masse oder einer Schüttgut (2) fremden Masse erfolgt.

11. Vorrichtung nach einem der Ansprüche Anspruch 7 bis 10, **dadurch gekennzeichnet, dass** die Massen- oder Signalveränderung durch Erhöhung (10) oder Erniedrigung (11) der Fördergeschwindigkeit erfolgt.

12. Vorrichtung nach einem der Ansprüche 7 bis 11, **dadurch gekennzeichnet, dass** die Massenänderung an der Mündung des Nachfüllbehälters (3) des Linearförderers (1) erfolgt.

13. Vorrichtung nach einem der Ansprüche 7 bis 12, **dadurch gekennzeichnet, dass** der Linearförderer (1) kippbar gelagert ist.

14. Vorrichtung nach einem der Ansprüche 7 bis 13, **dadurch gekennzeichnet, dass** die Masse des transportierten Schuttgutes (2) durch je zwei nacheinander folgende reziproke Vorgänge durch Zugabe oder Entnahme einer Schüttgut (2) eigenen Masse oder einer Schüttgut (2) fremden Masse oder der Änderung der Fördergeschwindigkeit konstant gehalten wird.

15. Verwendung einer Vorrichtung nach einem der Ansprüche 7 bis 14, in der pharmazeutischen Industrie im Bereich der Medikamentenherstellung, insbesondere im Bereich der Pelletierung von Kapseln und Tabletten.

## Claims

1. Method for determining the mass and conveying speed of bulk materials in a linear conveyor (1), the bulk material (2) reaching a conveying channel (5) via an opening (4) of a bulk material container (3),
**characterized in that**
a discontinuity in the constant profile of the signal of a sensor (20) is generated by a change in mass of the conveyed bulk material, and the torque (22) of the weight of the conveyed bulk material (2) is established by means of the sensor (20), the generated signal change (18) being evaluated in order to determine the mass and/or the speed of the conveyed bulk material (2).

2. Method according to claim 1, **characterized in that** the change in mass takes place by adding or removing a mass that is part of the bulk material (2) or a mass that is foreign to the bulk material (2).

3. Method according to either claim 1 or claim 2, **characterized in that** the change in mass or the signal change takes place by increasing (10) or decreasing (11) the conveying speed.

4. Method according to any of claims 1 to 3, **characterized in that** the change in mass takes place at the opening of the refill container (3) of the linear conveyor (1).

5. Method according to any of claims 1 to 4, **characterized in that** the mass of the transported bulk material (2) on the linear conveyor (1) is kept constant in each case by two successive reciprocal processes by adding or removing a mass that is part of the bulk material (2) or a mass that is foreign to the bulk material (2) or changing the conveying speed.

6. Method according to any of claims 1 to 5, **characterized in that** the linear conveyor (1) is mounted so as to be tiltable.

7. Device for determining the mass and conveying speed of bulk materials in a linear conveyor (1), the bulk material (2) reaching a conveying channel (5) via an opening (4) of a bulk material container (3), **characterized in that** the torque (22) of the weight of the conveyed bulk material (2) is established by means of a sensor (20), a discontinuity of the signal of a sensor (20) is generated by a change in mass of the conveyed bulk material (2), and the generated signal change (18) is determined in an evaluation unit in order to establish the mass and/or the speed of the conveyed bulk material (2).

8. Device according to claim 7, **characterized in that** the sensor (20) is arranged outside the force flow line (9) of the weight of the linear conveyor (1).

9. Device according to either claim 7 or claim 8, **characterized in that** the sensor (20) is arranged in the range of 50 mm to 400 mm, preferably 150 mm to 350 mm, particularly preferably 200 mm to 300 mm, outside the force flow line (9) of the weight of the linear conveyor (1).

10. Device according to any of claims 7 to 9, **characterized in that** the change in mass takes place by adding or removing a mass that is part of the bulk material (2) or a mass that is foreign to the bulk material (2).

11. Device according to any of claims 7 to 10, **characterized in that** the change in mass or the signal change takes place by increasing (10) or decreasing (11) the conveying speed.

12. Device according to any of claims 7 to 11, **characterized in that** the change in mass takes place at the opening of the refill container (3) of the linear conveyor (1).

13. Device according to any of claims 7 to 12, **characterized in that** the linear conveyor (1) is mounted so as to be tiltable.

14. Device according to any of claims 7 to 13, **characterized in that** the mass of the transported bulk material (2) is kept constant in each case by two successive reciprocal processes by adding or removing a mass that is part of the bulk material (2) or a mass that is foreign to the bulk material (2) or by changing the conveying speed.

15. The use of a device according to any of claims 7 to 14 in the pharmaceutical industry in the field of medication production, in particular in the field of pelleting capsules and tablets.

## Revendications

1. Procédé permettant la détermination de la masse et de la vitesse de transport de matières en vrac dans un transporteur linéaire (1), dans lequel la matière en vrac (2) passe par une embouchure (4) d'un récipient pour matière en vrac (3) sur un canal de transport (5),
**caractérisé en ce qu'**
une discontinuité dans l'évolution constante du signal d'un capteur (20) est générée par une modification de la masse de la matière en vrac transportée et le couple (22) de la force de poids de la matière en vrac (2) transportée est défini à l'aide du capteur (20), une évaluation de la modification du signal (18) générée s'effectuant afin de définir la masse et/ou la vitesse de la matière en vrac (2) transportée.

2. Procédé selon la revendication 1, **caractérisé en ce que** la modification de la masse s'effectue par addition ou prélèvement d'une matière en vrac (2) de masse propre ou d'une matière en vrac (2) de masse étrangère.

3. Procédé selon la revendication 1 ou 2, **caractérisé en ce que** la modification de la masse ou du signal s'effectue par augmentation (10) ou diminution (11) de la vitesse de transport.

4. Procédé selon l'une des revendications 1 à 3, **caractérisé en ce que** la modification de la masse s'effectue au niveau de l'embouchure du récipient de remplissage (3) du transporteur linéaire (1).

5. Procédé selon l'une des revendications 1 à 4, **caractérisé en ce que** la masse de la matière en vrac (2) transportée sur le transporteur linéaire (1) est maintenue constante par deux opérations réciproques successives par addition ou prélèvement d'une matière en vrac (2) de masse propre ou d'une matière en vrac (2) de masse étrangère ou par la modification de la vitesse de transport.

6. Procédé selon l'une des revendications 1 à 5, **caractérisé en ce que** le transporteur linéaire (1) est monté de manière à pouvoir basculer.

7. Dispositif permettant la détermination de la masse et de la vitesse de transport de matières en vrac dans un transporteur linéaire (1), dans lequel la matière en vrac (2) passe par une embouchure (4) d'un récipient pour matière en vrac (3) sur un canal de transport (5), **caractérisé en ce que**, à l'aide d'un capteur (20), le couple (22) de la force de poids de la matière en vrac (2) transportée est défini et une discontinuité du signal d'un capteur (20) est générée par une modification de la masse de la matière en vrac (2) transportée et la modification du signal (18) générée est déterminée dans une unité d'évaluation pour la définition de la masse et/ou de la vitesse de la matière en vrac (2) transportée.

8. Dispositif selon la revendication 7, **caractérisé en ce que** le capteur (20) est disposé à l'extérieur de la ligne de flux de force (9) de la force de poids du transporteur linéaire (1).

9. Dispositif selon la revendication 7 ou 8, **caractérisé en ce que** le capteur (20) est disposé dans une plage de 50 mm à 400 mm, de préférence de 150 mm à 350 mm, de manière particulièrement préférée de 200 mm à 300 mm, à l'extérieur de la ligne de flux de force (9) de la force de poids du transporteur linéaire (1).

10. Dispositif selon l'une des revendications 7 à 9, **caractérisé en ce que** la modification de la masse s'effectue par addition ou prélèvement d'une matière en vrac (2) de masse propre ou d'une matière en vrac (2) de masse étrangère.

11. Dispositif selon l'une des revendications 7 à 10, **caractérisé en ce que** la modification de la masse ou du signal s'effectue par augmentation (10) ou diminution (11) de la vitesse de transport.

12. Dispositif selon l'une des revendications 7 à 11, **caractérisé en ce que** la modification de la masse s'effectue au niveau de l'embouchure du récipient de remplissage (3) du transporteur linéaire (1).

13. Dispositif selon l'une des revendications 7 à 12, **caractérisé en ce que** le transporteur linéaire (1) est monté de manière à pouvoir basculer.

14. Dispositif selon l'une des revendications 7 à 13, **caractérisé en ce que** la masse de la matière en vrac (2) transportée est maintenue constante par deux opérations réciproques successives par addition ou prélèvement d'une matière en vrac (2) de masse propre ou d'une matière en vrac (2) de masse étrangère ou par la modification de la vitesse de transport.

15. Utilisation d'un dispositif selon l'une des revendications 7 à 14 dans l'industrie pharmaceutique dans le domaine de la fabrication de médicaments, en particulier dans le domaine de la granulation de capsules et de comprimés.
